# FASCICULE DE BREVET EUROPEEN

(11) **EP 0 698 318 B1**
(45) Date de publication et mention de la délivrance du brevet: **10.12.1997**
(21) Numéro de dépôt: 94916271.3
(22) Date de dépôt: 11.05.1994
(51) Int. Cl.: H04B 7/26

(54) **PROCEDE DE TRANSFERT INTERCELLULAIRE, OU HANDOVER, ENTRE DEUX CELLULES D'UN RESEAU CELLULAIRE DE RADIOCOMMUNICATIONS MOBILES**
VERFAHREN ZUM INTERZELLULAREN UMLEGEN ODER WEITERREICHEN ZWISCHEN ZWEI ZELLEN EINES ZELLENMOBILFUNKNETZWERKES
HANDOVER METHOD BETWEEN TWO CELLS OF A CELLULAR MOBILE RADIOCOMMUNICATION NETWORK

(30) Priorité: 14.05.1993 FR 9305833
(43) Date de publication de la demande: 28.02.1996
(73) Titulaire: ALCATEL ALSTHOM COMPAGNIE GENERALE D'ELECTRICITE, 75008 Paris (FR); ALCATEL N.V., NL-1077 XX Amsterdam (NL)
(72) Inventeur: DUPUY, Pierre, F-75014 Paris (FR)
(74) Mandataire: Renaud-Goud, Thierry
(86) Numéro de dépôt international: FR9400561
(87) Numéro de publication internationale: WO9427383

(56) Documents cités:
- EP-A- 0 398 773
- WO-A-92/22966
- MOBILE RADIO CONFERENCE, Octobre 1991, NICE (FR) pages 51 - 55, XP391318 M. MOULY ET AL 'THE PSEUDO-SYNCHRONISATION, A COSTLESS FEATURE TO OBTAIN THE GAINS OF A SYNCHRONISED CELLULAR NETWORK' cité dans la demande

## Description

La présente invention concerne un procédé de transfert intercellulaire entre deux cellules d'un réseau cellulaire de radiocommunications mobiles notamment d'un réseau GSM (Global System for Mobile communications). Lorsqu'une station mobile évoluant dans des cellules d'un réseau de radiocommunications mobiles , munies chacune d'une station de base, passe d'une cellule à une autre cellule voisine, il est nécessaire, le cas échéant, d'assurer la continuité de la communication en cours, sachant que la fréquence utilisée pour les échanges de données de parole (ou celle(s) utilisée(s) pour les échanges de données de signalisation) entre une station mobile (ci-après dénommée mobile) et une station de base change lorsque l'on passe d'une cellule à une cellule voisine. Un procédé permettant d'assurer une telle continuité est couramment appelé "handover" (en français : transfert intercellulaire) dans la terminologie GSM.

La description qui va suivre reprend les termes couramment utilisés dans la terminologie GSM. Pour plus d'informations, on peut se référer à la revue "Digital Cellular Mobile Communication Seminar" du séminaire tenu à ce sujet du 16 au 18 octobre 1990 à Nice.

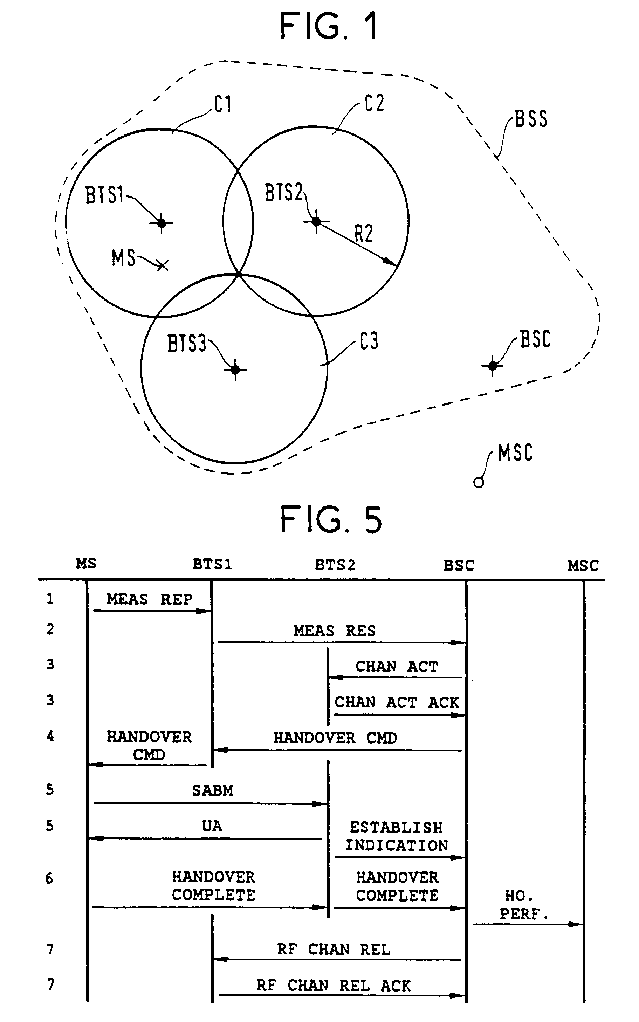

La figure 1 représente schématiquement un détail de la structure d'un réseau de type GSM constitué d'une pluralité de cellules dont trois seulement, référencées C1, C2 et C3, sont représentées. Une station mobile MS (par exemple un radiotéléphone embarqué dans un véhicule) se déplace dans ce réseau GSM.

Une cellule d'un réseau GSM correspond en pratique à la couverture géographique d'une station émettrice-réceptrice de base qui lui est associée et qui est donc située en son centre. Chaque station de base comprend un ou plusieurs émetteurs-récepteurs, chacun associé à une antenne et à de l'équipement de traitement. En outre, comme on le voit sur la figure 1, les couvertures géographiques des stations se recouvrent partiellement.

Les cellules C1, C2 et C3 sont ainsi associées respectivement aux stations de base BTS1, BTS2 et BTS3. Ces dernières sont gérées par un contrôleur de station de base BSC. Le contrôleur BSC a notamment pour fonction de gérer les fréquences, et sur ces dernières, les canaux disponibles au niveau de chaque station de base. L'ensemble constitué par un contrôleur BSC et les stations de base associées est appelé système de stations de base et noté BSS. Plusieurs contrôleurs BSC peuvent être prévus, chacun pilotant un nombre prédéterminé de stations de base. Chaque contrôleur BSC est relié à un centre de commutation, noté MSC, qui est la structure maître d'un réseau GSM. Un MSC donné peut donc piloter le fonctionnement de plusieurs systèmes BSS constituant un réseau mobile de terrain public, couramment appelé PLMN.

Le fonctionnement d'un tel réseau est le suivant : le mobile MS envoie des signaux sous forme de trains de données numériques ou paquets, appelés bursts, à la station BTS1 aussi longtemps qu'il se situe dans la cellule C1, et la station BTS1 transmet les informations extraites de ces bursts vers le contrôleur BSC qui les transmet à son tour à leur destinataire par l'intermédiaire du commutateur MSC. Le destinataire peut être fixe ou bien constitué par un autre mobile.

Chaque burst de données, de parole par exemple, est transmis dans un intervalle de temps de durée 577 µs, huit intervalles de temps successifs constituant une trame. Huit stations mobiles telles que MS peuvent donc communiquer sur le même canal radio, c'est-à-dire sur la même fréquence porteuse, grâce à l'utilisation dans le réseau GSM de l'accès multiple à répartition dans le temps (AMRT ou en anglais TDMA). Habituellement, deux à quatre canaux radio sont affectés à chaque station de base, et 16 à 32 intervalles de temps ou canaux sont donc disponibles à l'émission au niveau de chaque cellule. Il en est de même à la réception.

Du fait de l'utilisation du principe de l'AMRT, il est primordial de veiller, dans le système GSM, à ce que les intervalles de temps affectés à chaque mobile MS dans une cellule donnée se succèdent dans un ordre prévu. Or un mobile MS et la station de base BTS dont il dépend ont chacun une horloge interne qui leur est propre. Il est donc nécessaire de tenir compte du décalage temporel dû au temps de propagation des ondes radio entre ce mobile MS et sa station de base BTS pour que le mobile MS n'émette pas de données pendant l'intervalle de temps (c'est-à-dire sur le canal) affecté à un autre mobile MS, sachant qu'un intervalle de temps dure 577 µs, et qu'une onde radio parcourt 300 m en 1 µs.

Lorsque le mobile MS se trouve dans la cellule C1, il reçoit non seulement des signaux de la station de base BTS1, mais également de BTS2 et de BTS3. Cette possibilité est prévue dans le système GSM de manière à permettre au mobile MS à la fois de connaître la synchronisation et de mesurer en permanence la qualité (par exemple le taux d'erreur par bit) et le niveau de réception des signaux reçus de la station de base de la cellule C1 dans laquelle il se trouve et de toutes les stations de base des cellules voisines C2 et C3. Ces mesures sont donc effectuées dans le sens descendant (station de base vers mobile).

Le mobile MS transmet ces mesures à BTS1 sous forme d'un Rapport de Mesure sur un canal appelé SACCH (Slow Associated Control Channel). Lorsque la qualité de la transmission entre MS et BTS1 devient inférieure par exemple à celle de la transmission entre MS et BTS2 (ou lorsque le niveau de réception de signaux reçus de BTS2 devient supérieur à celui des signaux reçus de BTS1), le BSC donne un ordre de changement de cellule qui permet de rattacher le mobile MS à la cellule C2 et par conséquent à la station de base BTS2 : le handover est alors réalisé, et la station de base BTS2 va poursuivre la transmission à la place de BTS1. Cette situation est typique notamment lorsque le mobile MS s'éloigne de BTS1 et se rapproche de BTS2.

Lorsqu'un handover est réalisé, il est donc nécessaire de synchroniser le mobile MS sur la station BTS2 de la nouvelle cellule C2 (dans tout ce qui suit on conviendra de qualifier d'ancien tout ce qui ce rapporte à la cellule C1 à laquelle le mobile MS était rattaché avant le handover, et de "nouveau" tout ce qui se rapporte à la cellule C2, à laquelle le mobile est rattaché après le handover).

De même, lorsque le mobile MS est mis sous tension, il doit être rattaché à une cellule et se synchroniser sur sa station de base afin d'émettre des signaux sur l'intervalle de temps qui lui est attribué.

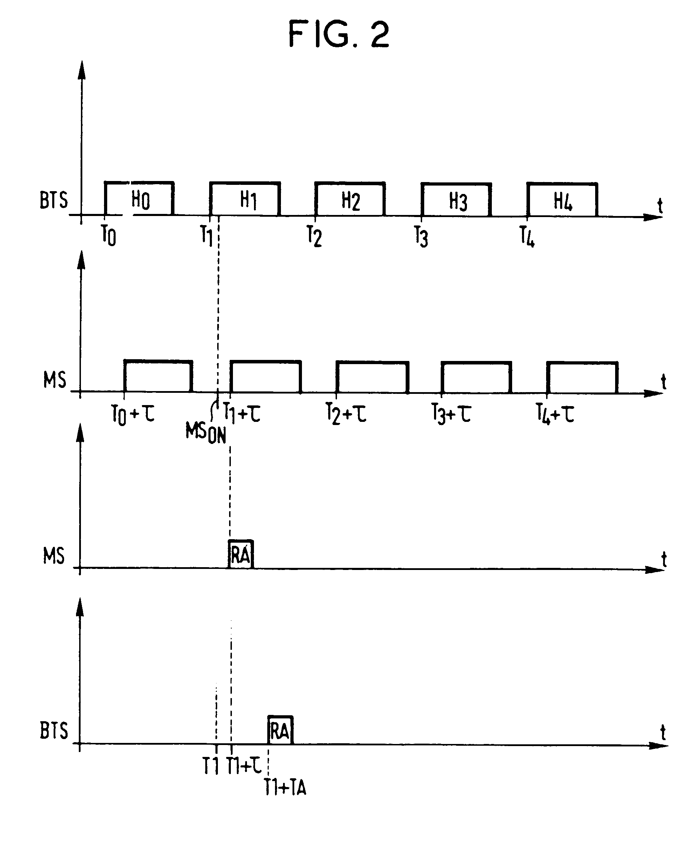

La figure 2 est un chronogramme corrélatif de signaux émis par la station BTS1 et par le mobile MS et montre comment, lorsque le mobile MS est mis sous tension et doit être rattaché par exemple à la cellule C1, le décalage temporel adéquat lui est communiqué.

Pour cela, la station BTS1, qui gère la cellule dans laquelle se trouve le mobile MS, émet régulièrement, à des instants référencés T₀, T₁, T₂, T₃ et T₄, et sur un canal de synchronisation SCH (Synchronisation CHannel) appartenant à un canal commun spécifique appelé BCCH (Broadcast Common CHannel) destiné de manière générale à transmettre des informations de synchronisation aux mobiles, un signal d'horloge H₀, H₁, H₂, H₃, H₄. Ce signal est utilisé lorsque le mobile MS doit être rattaché à une cellule du réseau GSM ; ceci se produit soit lorsque le mobile se connecte pour la première fois au réseau après avoir été mis sous tension, soit dans les cas de handover, comme on le verra plus loin.

Lorsque le mobile MS se connecte pour la première fois au réseau après avoir été mis sous tension, il ne peut recevoir le signal d'horloge qu'à partir de l'instant, noté MS_{ON}, où il est mis sous tension.

Etant donné que le mobile MS ne se trouve pas, en général, au pied de la station de base BTS1, le premier signal d'horloge qu'il reçoit après l'instant MS_{ON}, ici le signal H₁, est décalé d'un temps noté τ par rapport à son instant d'émission T₁ par la station de base BTS1. Le signal H₁ est donc reçu par le mobile à l'instant T₁+τ.

A cet instant (ou après une durée prédéterminée et connue de la BTS1 suivant cet instant), le mobile MS qui souhaite se connecter pour la première fois après sa mise sous tension à la station BTS1 envoie vers cette dernière, sur un canal de signalisation, un message d'accès appelé Random Access (RA) et constitué d'un Access Burst (dans le cas du handover, le message d'accès est appelé Handover Access, noté HA). Chaque Access Burst a une durée inférieure à celle d'un burst constituant un signal normal (appelé Normal Burst) contenant par exemple des données de parole, de sorte qu'il ne peut interférer avec les signaux émis par un autre mobile dans l'intervalle de temps suivant.

A la réception de ce signal (temps T₁+TA), la station BTS1 peut déterminer le temps TA (pour Timing Advance ou en français avance temporelle) séparant cette réception de l'émission du signal d'horloge H₁. Ce temps TA correspond à deux fois le temps de transmission d'un signal entre le mobile MS et la station BTS1 c'est-à-dire à deux fois le temps τ. La station BTS1 envoie alors, sur un canal de signalisation appelé AGCH (Access Grant CHannel), un message au mobile MS pour lui indiquer qu'il doit émettre ses signaux avec une avance de TA par rapport à son signal d'horloge : le mobile peut alors émettre des signaux normaux sans risque de recouvrement avec ceux émis par d'autres mobiles. De ce fait, on est assuré que les signaux émis par les différents mobiles sur un canal de transmission donné arrivent bien successivement à la station BTS1.

Etant donné que la distance du mobile MS à la station BTS1 peut évoluer dans le temps, il est nécessaire d'effectuer fréquemment une correction de la synchronisation du mobile MS. Après la détermination initiale de l'avance temporelle, cette dernière est donc corrigée, de sorte que le mobile MS est maintenu en synchronisation avec la station BTS1 lorsqu'il se déplace dans la cellule C1.

Dans le cas du rattachement du mobile MS à la cellule C2 faisant suite à un ordre de changement de cellule du BSC, il existe quatre types de handover, qui diffèrent par la méthode employée pour effectuer la synchronisation du mobile MS avec la station de base BTS2 de la nouvelle cellule C2 : le handover synchrone, le handover asynchrone, le handover pseudo-synchrone et le handover pré-synchronisé.

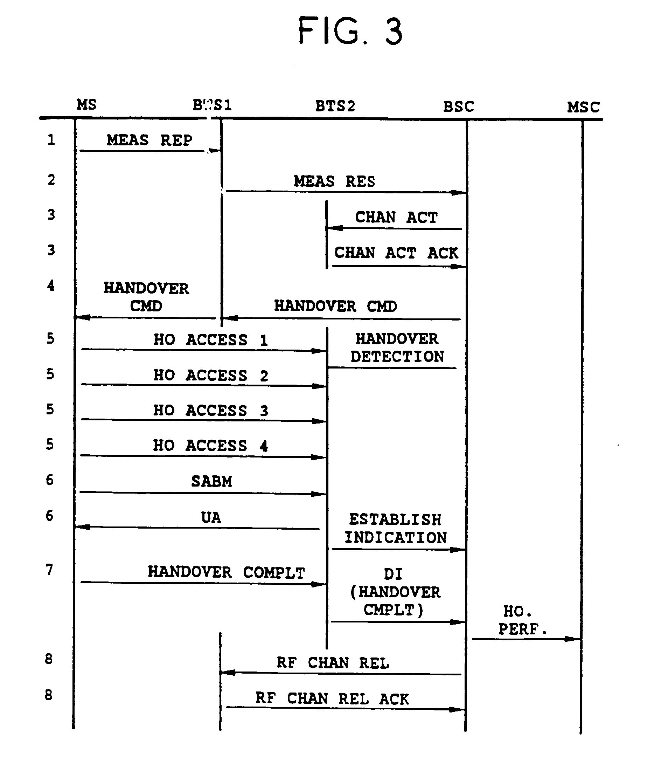

Le handover synchrone, dont le principe est représenté à la figure 3, consiste à piloter les horloges d'un certain nombre de stations BTS d'un système GSM donné de telle sorte qu'elles soient synchrones. Ainsi, lorsque le mobile MS passe de la cellule C1 à la cellule C2, ces deux cellules étant couvertes par des BTS synchrones, il n'est pas nécessaire de lui fournir une nouvelle information d'avance temporelle, puisque celle-ci est immédiatement déduite de celle qu'il utilisait antérieurement dans la cellule C1 et du décalage temporel entre les stations de base BTS1 et BTS2, connu du mobile MS.

Dans la procédure de handover synchrone, huit étapes de transmission successives sont nécessaires.

L'étape 1 est celle pendant laquelle le mobile MS envoie à la station BTS1 un rapport de mesure noté MEAS REP, qui contient des résultats de mesures destinés à être utilisés par le contrôleur BSC pour déclencher un handover dans le cas où ils montrent que la qualité de la transmission entre le mobile MS et BTS1 est inférieure à celle de la transmission entre le mobile MS et BTS2, ou que le niveau de réception des signaux en provenance de BTS1 est inférieur à celui des signaux en provenance de BTS2. Ce message est envoyé deux fois par seconde à la station BTS1 par le mobile MS.

A l'étape 2, la station BTS1 transmet l'information contenue dans le message MEAS REP au contrôleur BSC par un message noté MEAS RES. Le BSC peut alors juger si un handover est nécessaire. Comme on l'a vu, les critères de décision sont notamment la qualité et la puissance des signaux reçus. D'autres types d'informations sont disponibles au niveau du MSC ou du BSC pour décider si un handover doit être effectué. Nous supposerons que ce cas se présente effectivement.

Dès lors, à l'étape 3, le contrôleur BSC active un canal de la station BTS2 (message CHAN ACT) et celle-ci acquitte l'allocation (message CHAN ACT ACK).

A l'étape 4, le contrôleur BSC envoie un ordre de changement de cellule, c'est-à-dire de changement de station de base, ou ordre de handover (message HANDOVER CMD) à la station BTS1 qui le retransmet immédiatement au mobile MS de manière transparente.

A l'étape 5, le mobile MS envoie des messages HANDOVER ACCESS (HA) successifs, en général quatre, à la station BTS2. Chaque HA a une durée de 5 ms environ, de sorte que le temps nécessaire pour envoyer les quatre HA est au moins de 20 ms. Ces HA sont émis sur un canal de trafic de données utiles, par exemple des données de parole, de sorte que le temps nécessaire à l'envoi des HA est pris sur le temps de transmission de la parole, qui est donc interrompue à cet effet, ce qui est bien sûr tout à fait indésirable.

Les HA peuvent en outre être utilisés pour effectuer le réglage du gain au niveau du récepteur de la BTS. Si le niveau du premier HA reçu par la BTS est trop élevé de sorte que le récepteur de la BTS2 est à saturation, le gain du récepteur de la BTS est diminué, et l'opération est répétée plusieurs fois (en général quatre fois) à l'aide des différents HA émis jusqu'à réception d'un signal ayant un niveau convenable.

D'autre part, dans le message HANDOVER CMD, un nombre tiré au hasard est affecté au mobile MS pour l'identifier. Cet identifiant doit être réutilisé par le mobile MS lors de l'émission des HA de sorte que, si un autre mobile vient à utiliser le canal réservé au mobile MS pour lequel le handover a été réalisé, la BTS2 ne reconnaîtra pas dans le HA de ce mobile "intrus" l'identifiant affecté lors du HANDOVER CMD. Ceci permet d'éviter le risque, pour deux mobiles, d'utiliser le même canal.

En outre, c'est grâce aux messages HA que la BTS mesure, dans le handover synchrone, la valeur exacte de la nouvelle avance temporelle TA2 que le mobile MS a déduite de l'ancienne avance temporelle TA1.

Cette indication est très importante, car la BTS2 en a besoin afin d'indiquer à son tour au mobile MS, ultérieurement, les corrections à apporter à son avance temporelle et résultant des modifications de sa position. En effet, une fois le handover terminé, le mobile MS indique régulièrement (en général deux fois par seconde) à la BTS2, par l'intermédiaire du SACCH montant, l'avance temporelle utilisée, de sorte que la BTS peut en permanence modifier cette donnée en fonction des déplacements du mobile. La BTS2 transmet donc régulièrement au mobile MS, par l'intermédiaire du SACCH descendant, les corrections à apporter à cette avance temporelle.

Une fois qu'elle a correctement reçu l'un des messages d'accès HA, la station BTS2 envoie (étape 5) un message HANDOVER DETECTION au contrôleur BSC pour lui indiquer que le mobile attendu est bien synchronisé.

A l'étape 6, immédiatement après l'envoi des quatre messages HANDOVER ACCESS, le mobile MS envoie un message de connexion SABM à la station BTS2. Ce message sert à établir de manière logique la connexion entre le mobile MS et la station BTS2, afin que tous les messages échangés ultérieurement le soient dans un mode dit "acquitté".

A partir de ce stade, le mobile MS dialogue avec la station BTS2 qui lui a alloué un intervalle de temps dans une trame véhiculée par une porteuse donnée, ainsi qu'une information d'avance temporelle TA2. Il est à noter ici que la transmission des données utiles de parole, interrompue après l'envoi du message HANDOVER CMD, peut reprendre avant l'émission du message SABM par le mobile MS.

La station BTS2 signale ensuite au mobile MS (message UA) qu'il a bien été entendu et que les échanges sont désormais effectués en mode "acquitté", et elle en informe le contrôleur BSC (message ESTABLISH INDICATION) ; le BSC peut alors commuter la ligne de communication affectée aux échanges entre le mobile MS et la station BTS2.

Le message ESTABLISH INDICATION peut également être envoyé après l'un des HA (immédiatement après le premier par exemple).

A l'étape 7, le mobile MS envoie un message HANDOVER COMPLETE à la station BTS2 pour l'informer que la procédure de handover est terminée et la station BTS2 retransmet immédiatement ce message vers le contrôleur BSC. Le contrôleur BSC en informe alors le centre de commutation MSC (message HO. PERF.).

A l'étape 8, le contrôleur BSC s'adresse à la station BTS1 (message RF CHAN REL) pour rendre disponible l'intervalle de temps (canal) préalablement alloué au mobile MS et celle-ci lui répond (message RF CHAN REL ACK).

Un inconvénient du handover synchrone réside dans la durée d'interruption de la parole occasionnée par l'envoi des messages d'accès HA. Cet inconvénient se manifeste notamment en milieu urbain où les cellules sont de taille réduite et où de nombreuses cellules peuvent être traversées pendant une conversation.

En outre, le handover synchrone est onéreux à mettre en oeuvre.

Le handover asynchrone est le plus fréquemment rencontré et le plus simple à mettre en oeuvre. Dans ce cas, les stations de base des cellules entre lesquelles le handover doit être effectué ne sont pas synchrones.

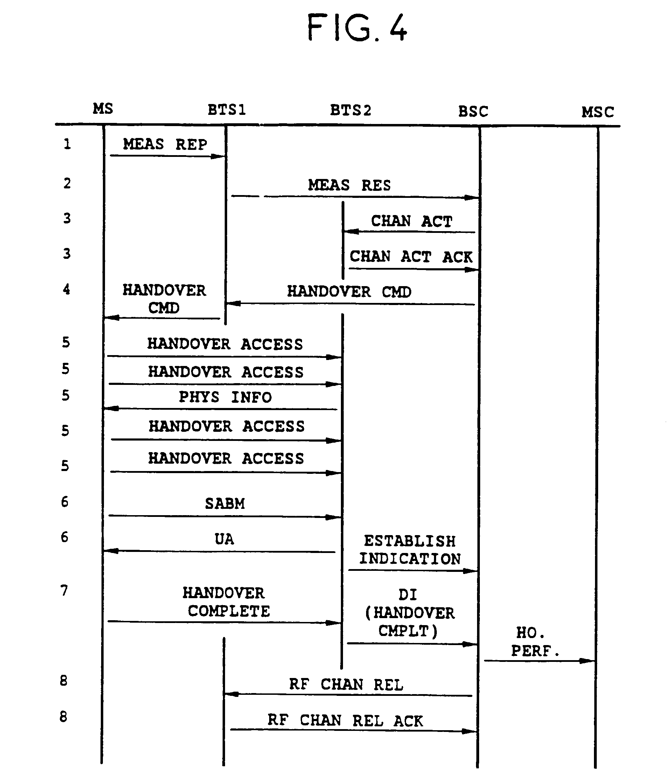

Le principe du handover asynchrone est représenté à la figure 4.

Les étapes 1 à 4 sont identiques à celles précédemment décrites en référence à la figure 3 concernant le handover synchrone.

A l'étape 5, le mobile MS envoie des messages HA successifs à BTS2 avec une avance temporelle nulle, c'est-à-dire comme s'il se trouvait au pied de la station BTS2. La nouvelle information d'avance temporelle que le mobile MS doit utiliser ne lui est en effet pas connue et c'est la station BTS2 qui la lui fournit (message PHYS INFO contenant entre autre l'indication TA2) après l'avoir déterminée de la manière décrite en relation avec la figure 2.

Les étapes 6 à 8 sont également identiques à celles du handover synchrone.

Le principal inconvénient du handover asynchrone réside dans le fait que la détermination de l'information d'avance temporelle par la station de base BTS2 est relativement longue et nécessite environ 40 à 80 ms pendant lesquelles le mobile ne peut continuer à émettre de données utiles, comme les données de parole par exemple. De plus, l'émission des signaux HA successifs nécessite, comme on l'a vu, 5 ms par signal. D'autres délais participent à retarder le handover et il est fréquent que la communication soit coupée pendant plus de 100 ms de sorte que, sur le plan du temps d'interruption de la parole, le procédé de handover asynchrone est plus pénalisant que celui du handover synchrone.

Il s'ensuit, dans le cas du handover asynchrone comme dans celui du handover synchrone, un désagrément d'utilisation d'un tel système.

Le handover pseudo-synchrone est un procédé plus complexe qui est utilisé en général lorsque les stations de base BTS1 et BTS2 sont plésio-synchrones, c'est-à-dire que leurs horloges (bases de temps) n'ont pas la même date, mais ont une durée de la seconde identique (le handover pseudo-synchrone est décrit par exemple dans l'article intitulé "The pseudo-synchronisation, a costless feature to obtain the gains of a synchronised cellular network", Comité MRC 1991, Novembre 1991, ainsi que dans le document EP-0 398 773).

Ainsi, le décalage temporel réel, noté RTD, entre les bases de temps des deux BTS plésio-synchrones est constant, et il suffit de le mesurer une seule fois.

Cette évaluation est effectuée lors d'une phase d'apprentissage par un mobile effectuant un handover asynchrone entre les deux BTS concernées, de la manière décrite en relation avec les figures 2 et 4. En effet, immédiatement après le handover asynchrone, le mobile MS connaît les valeurs de TA1, TA2, et le décalage temporel dit observé (OTD) entre les deux stations de base, qui est différent du décalage temporel réel RTD. La valeur de OTD est connue par le mobile du fait que ce dernier reçoit en permanence des signaux à la fois de la cellule C1 dans laquelle il se trouve et des cellules voisines telles que C2. Ainsi, d'après la formule : RTD = OTD+TA1-TA2, il est possible de déterminer la valeur de RTD à l'aide d'un handover asynchrone.

Le décalage temporel réel ainsi déterminé est transmis aux BTS concernées et donc définitivement connu d'elles, et les autres mobiles peuvent alors effectuer des handovers pseudo-synchrones en tenant compte de ce décalage temporel réel et en déduisant directement la nouvelle avance temporelle TA2 qu'ils doivent utiliser dans la station de base BTS2 à partir de l'ancienne avance temporelle TA1 correspondant à la station de base BTS1 et du décalage temporel observé OTD entre BTS1 et BTS2.

Il est également possible de réaliser un handover pseudo-synchrone entre des BTS qui ne sont pas plésio-synchrones. Dans ce cas, la valeur de RTD est régulièrement corrigée à chaque nouveau handover entre BTS1 et BTS2 grâce à l'envoi à la BTS2 de la valeur OTD+TA1 par le mobile à la fin de chaque handover dans le message HANDOVER COMPLETE.

En pratique, le principe du handover pseudo-synchrone est similaire à celui du handover synchrone, du fait notamment que le handover synchrone est un cas particulier de handover pseudo-synchrone avec un décalage temporel réel RTD égal à zéro.

Le handover pseudo-synchrone présente donc les mêmes inconvénients que le handover synchrone en ce qui concerne l'interruption du temps de parole due à l'émission des messages d'accès HA.

On connaît enfin un dernier type de handover, appelé handover pré-synchronisé, décrit par exemple dans le document WO 92/22966, dans lequel une avance temporelle prédéterminée est transmise par le BSC au mobile MS dans le message de changement de cellule HANDOVER CMD. Dans ce cas encore, l'émission des messages HA interrompt la communication de manière indésirable.

Le problème posé par l'interruption du temps de parole due à l'émission des messages d'accès HA est spécifique aux handovers, et ne se rencontre pas lorsque le mobile est rattaché pour la première fois à une cellule après avoir été mis sous tension, puisque dans ce cas, la communication n'est pas encore établie au moment où le mobile émet les RANDOM ACCESS.

Le but de l'invention est de mettre au point un procédé de handover permettant d'éviter les interruptions de la parole dues à l'émission des messages d'accès HA dans les procédés de handover synchrone, pseudo-synchrone ou pré-synchronisé.

Cet objectif, ainsi que d'autres qui apparaîtront par la suite, est atteint grâce à un procédé de handover entre deux cellules d'un réseau cellulaire de radiocommunications mobiles, chacune desdites cellules étant munie d'une station de base, procédé selon lequel une station mobile communicant avec une première desdites stations de base, dite ancienne station de base :
- reçoit un ordre de changement de station de base,
- transmet un message contenant une information d'établissement de connexion ou des données utiles à la deuxième desdites stations de base, dite nouvelle station de base, en tenant compte d'une avance temporelle, dite nouvelle avance temporelle, avec laquelle ladite station mobile doit retarder l'émission de ses messages à destination de ladite nouvelle station de base, ledit procédé étant caractérisé en ce que ledit ordre de changement de station de base indique en outre à ladite station mobile de ne pas émettre de message d'accès en direction de ladite nouvelle station de base et en ce que ladite nouvelle avance temporelle est déterminée par ladite station mobile lorsqu'elle ne lui est pas communiquée dans ledit ordre de changement de station de base.

Grâce à l'invention, le temps d'interruption de la parole est diminué de la durée nécessaire à l'émission des messages d'accès HA.

Dans un premier mode de mise en oeuvre de la présente invention, les ancienne et nouvelle stations de base sont synchrones et ne se trouvent pas toutes deux sur le même site ; dans ce cas, la nouvelle avance temporelle est déterminée par le mobile à partir de la dernière valeur de l'avance temporelle, dite ancienne avance temporelle, avec laquelle le mobile retardait l'émission de ses messages à destination de l'ancienne station de base, ainsi que du décalage temporel observé par le mobile entre l'ancienne et la nouvelle station de base.

La nouvelle station de base détermine alors elle-même la nouvelle avance temporelle utilisée par le mobile à partir de la valeur de la différence entre l'ancienne avance temporelle et le décalage temporel observé, cette valeur étant transmise à la nouvelle station de base par le mobile dans un message que ce dernier lui adresse, après avoir transmis le message contenant une information d'établissement de connexion ou des données utiles à la nouvelle station de base, pour l'informer que le procédé de handover est terminé.

Selon une autre possibilité, la nouvelle station de base est informée de la nouvelle avance temporelle utilisée par le mobile au moyen d'un rapport de mesure régulièrement envoyé par le mobile à la nouvelle station de base. En attendant le premier ou l'un des premiers rapports de mesure suivant l'ordre de changement de station de base, la nouvelle station de base envoie au mobile un message lui indiquant qu'il doit conserver la valeur courante de la nouvelle avance temporelle pour retarder l'émission de ses messages à destination de la nouvelle station de base.

Dans un deuxième mode de mise en oeuvre de la présente invention, les ancienne et nouvelle stations de base sont synchrones et se trouvent toutes deux sur le même site ; dans ce cas, la nouvelle avance temporelle est identique à la dernière valeur de l'avance temporelle, dite ancienne avance temporelle, avec laquelle le mobile retardait l'émission de ses messages à destination de l'ancienne station de base.

La nouvelle station de base est alors informée de la nouvelle avance temporelle par le contrôleur de station de base qui la contrôle. Elle peut également en être informée ou la déterminer de la même manière que dans le cas où les deux stations de base ne se trouvent pas sur le même site.

Dans un troisième mode de mise en oeuvre de la présente invention, les ancienne et nouvelle stations de base sont plésio-synchrones ; dans ce cas, la nouvelle avance temporelle est déduite de la dernière valeur de l'avance temporelle, dite ancienne avance temporelle, avec laquelle le mobile retardait l'émission de ses messages à destination de l'ancienne station de base, ainsi que du décalage temporel observé par le mobile et du décalage temporel réel connu par les ancienne et nouvelle stations de base, entre l'ancienne et la nouvelle station de base.

La nouvelle station de base peut alors déterminer elle-même la nouvelle avance temporelle. Dans ce cas, elle utilise en outre pour cela le décalage temporel réel connu par elle.

Selon une autre possibilité, la nouvelle station de base peut être informée de la nouvelle avance temporelle de la même manière que dans le cas où les stations de base sont synchrones et ne se trouvent pas sur le même site.

Enfin, dans un dernier mode de mise en oeuvre de la présente invention, les ancienne et nouvelle stations de base sont asynchrones et le handover est pré-synchronisé ; dans ce cas, le message contenant l'ordre de changement de station de base contient en outre la nouvelle avance temporelle.

Dans ce cas, la nouvelle avance temporelle peut être communiquée à la nouvelle station de base par l'intermédiaire de l'ordre de changement de station de base.

Selon une autre possibilité, la nouvelle station de base peut être informée de la nouvelle avance temporelle utilisée par le mobile au moyen d'un rapport de mesure régulièrement envoyé par le mobile à la nouvelle station de base. En attendant le premier ou l'un des premiers rapports de mesure suivant l'ordre de changement de station de base, la nouvelle station de base envoie au mobile un message lui indiquant qu'il doit conserver l'ancienne avance temporelle pour retarder l'émission de ses messages à destination de la nouvelle station de base.

Un contrôleur de stations de base, une station de base et un mobile adaptés pour la mise en oeuvre du procédé selon l'invention sont décrits en relation avec les revendications 13 à 18.

D'autres caractéristiques et avantages de l'invention apparaîtront à la lecture de la description suivante d'un mode de réalisation préférentiel de l'invention, donné à titre illustratif et non limitatif, et des dessins annexés dans lesquels :
- la figure 1 représente schématiquement un détail de la structure d'un réseau de type GSM,
- la figure 2 est un chronogramme corrélatif de signaux échangés entre une station de base et un mobile,
- la figure 3 représente une procédure de handover synchrone de l'art antérieur,
- la figure 4 représente une procédure de handover asynchrone de l'art antérieur,
- la figure 5 représente une procédure de handover synchrone selon l'invention,
- la figure 6 représente schématiquement une station de base pour la mise en oeuvre du procédé selon l'invention,
- la figure 7 représente également schématiquement un contrôleur de stations de base pour la mise en oeuvre du procédé selon l'invention,
- la figure 8 représente très schématiquement une station mobile pour la mise en oeuvre du procédé selon l'invention.

Dans les figures 1 à 5, les éléments communs portent les mêmes références.

Les figures 1 à 4 ont été décrites en référence à l'état de la technique.

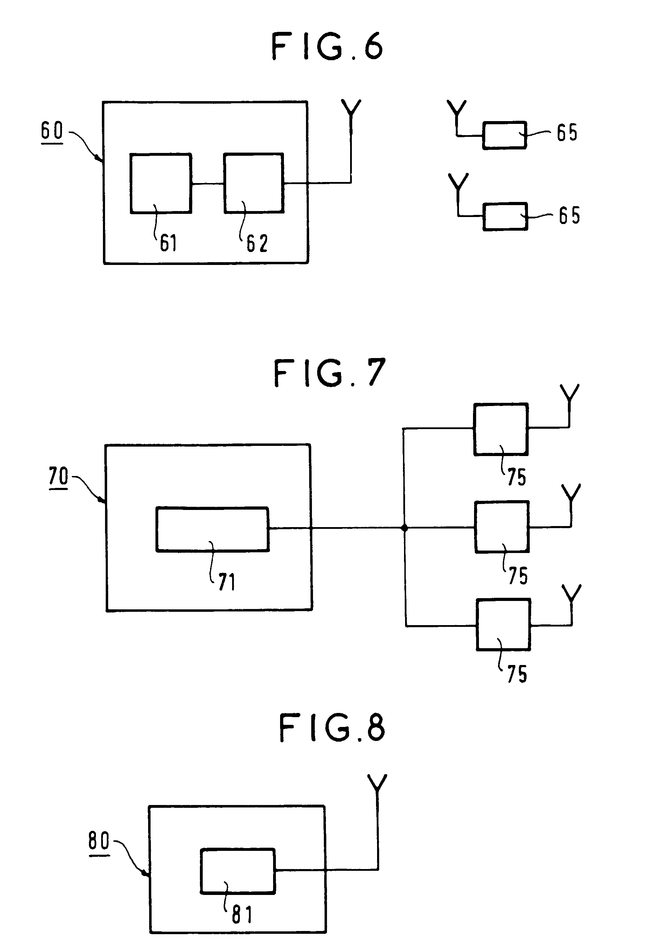

La figure 5 représente une procédure de handover synchrone selon l'invention. Ce handover est dit interne car les stations de base de la cellule dans laquelle se trouve initialement le mobile et de celle à laquelle il doit être rattaché après le handover sont contrôlées par un même contrôleur BSC.

Dans la procédure de handover synchrone selon l'invention, les étapes 1 à 4 sont identiques à celles décrites en relation avec la figure 3, et l'on ne les décrira pas plus en détail ici.

A la différence du handover synchrone de l'art antérieur, il n'y a pas, dans le handover synchrone selon l'invention, d'émission de messages d'accès HA. L'étape 5 de la figure 3 est donc supprimée et, après l'envoi du message HANDOVER CMD au mobile MS, la station BTS2 attend directement la réception du message SABM ou directement de données utiles, par exemple de parole.

On va à présent s'attacher à expliquer pourquoi la suppression de l'émission des messages d'accès HA n'est en rien préjudiciable au déroulement correct de la procédure de handover.

Dans le cas du handover synchrone, les messages HANDOVER ACCESS ne servent pas en pratique à la détermination de la nouvelle avance temporelle TA2 à utiliser pai le mobile dans la nouvelle cellule C2 (c'est-à-dire celle couverte par la station de base BTS2), puisque ce dernier peut déduire lui-même directement cette information de la dernière valeur de l'avance temporelle TA1 utilisée dans l'ancienne cellule C1 (celle couverte par la station de base BTS1), étant donné que les stations de base BTS1 et BTS2 de ces deux cellules sont supposées synchrones.

Pour la détermination de TA2, le mobile utilise donc la dernière valeur de TA1, qu'il connaît, ainsi que la valeur du décalage temporel observé par lui (OTD), relative aux stations de base BTS1 et BTS2. Etant donné que, dans le handover synchrone, RTD est égal à zéro, le mobile déduit directement TA2 par la formule : TA2 = TA1+OTD.

D'autre part, l'utilisation des messages HANDOVER ACCESS dans le but d'effectuer un réglage du gain de l'émetteur du mobile peut être remplacée par d'autres méthodes équivalentes de réglage du gain bien connues de l'homme de l'art, comme par exemple le dédoublement du signal d'entrée au niveau du récepteur de la BTS2, ou encore une méthode de réglage rapide du gain.

En outre, l'utilisation des messages HANDOVER ACCESS pour vérifier que le mobile qui les émet est bien celui ayant reçu l'ordre de changement de cellule HANDOVER CMD n'est en pratique pas nécessaire car la probabilité qu'un autre mobile utilise le canal alloué lors du handover au mobile concerné par ce dernier est très faible.

Le problème alors est de permettre à la BTS2 de connaître l'avance temporelle TA2 effectivement utilisée par le mobile MS à la suite du handover, puisque d'une part, il n'y a plus de messages HANDOVER ACCESS pour permettre de mesurer cette information et d'autre part, une fois le handover réalisé et avant l'émission par le mobile du premier rapport de mesure suivant ce handover, seul le mobile connaît TA2.

Deux solutions sont alors envisageables, selon l'invention, selon que BTS1 et BTS2 se trouvent ou non sur le même site.

Deux BTS peuvent se trouver sur le même site lorsqu'on utilise une cellule dite sectorisée, c'est-à-dire constituée d'une pluralité de cellules élémentaires appelées secteurs et formant des portions radiales du disque défini par la couverture de la cellule sectorisée, chacune de ces cellules élémentaires étant associée à une BTS, et toutes les BTS associées aux cellules élémentaires se trouvant au centre de la cellule sectorisée, et par conséquent sur le même site.

Deux BTS peuvent également se trouver sur le même site lorsque l'on utilise des cellules concentriques, c'est-à-dire lorsque l'on émet à des distances différentes selon les fréquences.

Dans le cas, donc, où les stations de base BTS1 et BTS2 se trouvent sur le même site, le fait, pour le mobile MS, de changer de cellule élémentaire ne modifie pas l'avance temporelle qu'il doit utiliser, cette avance temporelle étant connue de la BTS1. Ainsi, il suffit par exemple que, dans le message CHAN ACT, le BSC informe la BTS2 que la nouvelle avance temporelle TA2 est identique à la dernière valeur de l'ancienne avance temporelle TA1.

Lorsque les stations de base BTS1 et BTS2 ne se trouvent pas sur le même site (cas classique du handover entre deux cellules qui ne sont pas des secteurs d'une même cellule sectorisée initiale ou qui ne sont pas concentriques), la station de base BTS2 peut déduire la nouvelle avance temporelle TA2 utilisée par le mobile MS par la formule générale : TA2 = OTD+TA1.

Etant donné que, dans le message HANDOVER COMPLETE, le mobile communique à la station de base BTS2 la valeur TA1+OTD, cette dernière, connaissant RTD (qui est nul dans le handover synchrone), peut en déduire la nouvelle avance temporelle TA2 utilisée par le mobile MS.

S'il n'est pas possible à la BTS2 de déterminer elle-même la nouvelle avance temporelle utilisée par le mobile MS, par exemple du fait qu'elle ne dispose pas de l'information lui permettant de connaître le type de handover qui a été effectué, elle peut par exemple attendre le premier (ou l'un des premiers) SACCH montant en provenance du mobile MS dans lequel le message MEAS REP comporte, entre autre, l'avance temporelle TA2 effectivement utilisée par le mobile MS après le handover. En attendant d'avoir reçu ce SACCH montant, la BTS2 indique au mobile MS, dans les SACCH descendants qu'elle émet également en général deux fois par seconde, qu'il ne doit pas modifier son avance temporelle courante, c'est-à-dire celle qu'il a initialement déterminée après le handover par la formule TA2 = TA1+OTD.

Cette information fournie par la BTS2 dans le SACCH remplace l'information habituelle de correction d'avance temporelle contenue dans ce dernier (voir plus haut) et permettant d'indiquer au mobile MS quelle correction il doit apporter à son avance temporelle.

Les étapes 5 à 7 du handover synchrone selon l'invention sont respectivement identiques aux étapes 6 à 8 précédemment décrites en relation avec la figure 3.

Dans une procédure de handover pré-synchronisé selon l'invention, le message HANDOVER CMD transmis au mobile pour lui donner l'ordre de changer de cellule contient l'avance temporelle que le mobile doit utiliser dans la nouvelle cellule C2 à laquelle il est rattaché. Ainsi, la suppression, selon l'invention, des messages HANDOVER ACCESS dans la procédure de handover pré-synchronisé ne pose aucun problème pour la connaissance par la BTS2 de l'avance temporelle utilisée par le mobile, étant donné que cette valeur peut lui être communiquée par le BSC.

Si cette valeur ne lui est pas communiquée par le BSC, la BTS2 peut attendre qu'elle lui soit fournie par l'intermédiaire du SACCH en provenance du mobile MS, de la même manière que précédemment.

Dans une procédure de handover pseudo-synchrone selon l'invention, les messages d'accès HA sont également supprimés. Le mobile détermine TA2 de la même manière que dans le handover synchrone selon l'invention, en utilisant en outre pour cela la valeur de RTD qui peut lui être communiquée par exemple dans le message HANDOVER CMD.

Pour connaître l'avance temporelle TA2 utilisée par le mobile MS, la BTS2 peut, de même que décrit précédemment en relation avec la procédure de handover synchrone selon l'invention, soit la déterminer elle-même par la formule TA2 = OTD-RTD+TA1 (on rappelle que RTD est constant lorsque le handover est pseudo-synchrone avec des BTS plésio-synchrones), soit attendre le premier (ou l'un des premiers) SACCH montant du mobile comportant cette information.

Ainsi, l'invention permet de supprimer, de manière non préjudiciable pour le reste de la procédure de handover ainsi que pour les communications ultérieures des mobiles, les messages de HANDOVER ACCESS qui, dans l'art antérieur, sont envoyés par le mobile alors que des communications peuvent être en cours. Ceci permet de gagner environ 20 ms de coupure de temps de parole, ce qui représente un avantage non négligeable.

Il est important de noter que l'invention ne s'applique qu'aux cas de handovers synchrone, pseudo-synchrone ou pré-synchronisé (c'est-à-dire dans lesquels l'avance temporelle est prédéterminée et communiquée au mobile dans l'ordre de changement de cellule).

L'invention présente surtout un intérêt lorsque l'on se trouve dans une zone à fort trafic de communications, dans laquelle les handovers sont nombreux puisque les cellules sont de petite taille : dans ce cas, on évite ainsi des coupures répétées de la parole au cours d'une même communication.

D'autre part, dans les zones à fort trafic, la charge de chaque BSC est importante, de sorte que ce dernier met de plus en plus de temps à piloter le handover, et la durée de ce dernier va donc s'en trouver fortement rallongée. Par conséquent, la réduction, grâce à l'invention, du temps nécessaire pour effectuer le handover va permettre de compenser l'accroissement de la durée de ce dernier du fait de l'augmentation de trafic prévue.

Par ailleurs, et de manière très avantageuse, la modification de la procédure de handover due à la présente invention n'implique pas de modification matérielle des différents éléments du réseau concernés (contrôleur de stations de base, station de base et mobile) . Il suffit en effet de modifier le contenu de l'ordre HANDOVER CMD envoyé par le BSC, de manière à indiquer au mobile dans ce message que l'émission des messages HANDOVER ACCESS n'est pas nécessaire. Ainsi, les modifications apportées par l'invention ne sont que des modifications logicielles, comme on peut le constater dans ce qui suit.

Plus précisément, une station de base 60, représentée schématiquement en figure 6, comprend :
- des moyens 61 pour déterminer la nouvelle avance temporelle,
- des moyens de gestion et de commande 62 destinés à élaborer et transmettre des messages de commande notamment à destination de mobiles 65.

Ces moyens de gestion et de commande 62 sont tels que, selon l'invention, ils sont capables d'élaborer et de transmettre à un mobile des messages pour lui indiquer, tant que la station de base 60 n'a pas reçu en provenance du mobile un rapport de mesure l'informant de la nouvelle avance temporelle qu'il utilise, de conserver la nouvelle avance temporelle qu'il a déterminée.

Les moyens 61 pour déterminer le cas échéant la nouvelle avance temporelle, utilisent pour ce faire, selon l'invention, l'une des méthodes indiquées précédemment.

Dans le cas d'un handover pré-synchronisé, les moyens 62 permettent également d'incorporer à l'ordre de changement de station de base qu'ils retransmettent à un mobile, la valeur de la nouvelle avance temporelle, reçue du contrôleur de stations de base.

Un contrôleur de station de base 70, représenté schématiquement en figure 7, comprend notamment des moyens de gestion et de commande 71 d'une pluralité de stations de base 75.

Ces moyens 71 élaborent et transmettent des messages de commande notamment à destination des stations de base 75 et plus particulièrement des ordres de changement de station de base, lors d'un handover.

Les moyens 71 sont tels que, selon l'invention, ces ordres permettent d'indiquer ensuite aux mobiles en communication avec les stations de base concernées, de ne pas émettre de messages d'accès lors du handover.

Les moyens 71 élaborent et transmettent également des messages indiquant aux stations de base la nouvelle avance temporelle à utiliser, dans le cas d'un handover pré-synchronisé.

Les moyens de gestion et de commande 71 élaborent et transmettent en outre des messages tels qu'ils permettent d'indiquer aux stations de base 75 de ne pas déterminer la nouvelle avance temporelle lors d'un handover et de prendre en compte pour celle-ci la valeur indiquée par le mobile dans l'un des premiers rapports de mesure qu'il envoie.

Les moyens de gestion et de commande peuvent également élaborer et transmettre des messages tels qu'ils permettent d'indiquer aux stations de base 75 la valeur de la nouvelle avance temporelle à utiliser.

Enfin, une station mobile 80 représentée très schématiquement en figure 8, comprend notamment des moyens 81 pour déterminer la nouvelle avance temporelle lors d'un handover selon l'une des méthodes indiquées précédemment.

Les station de base, contrôleur et station mobile décrits ci-dessus l'ont été uniquement en rapport avec leurs éléments intervenant dans la mise en oeuvre de la présente invention. Ils comportent bien entendu de nombreux autres éléments qui n'entrent pas dans cette mise en oeuvre et n'ont pour cela pas été décrits.

Eventuellement, si l'émission des messages HANDOVER ACCESS est nécessaire à la BTS pour que cette dernière effectue un réglage de gain, le BSC ne modifie pas le HANDOVER CMD, de sorte que tout se passe comme dans les procédures connues de l'art antérieur.

L'invention permet donc, dans les procédures de handover synchrone, pseudo-synchrone et pré-synchronisé, de supprimer du temps de coupure de la parole sans pour autant pénaliser la procédure ou rendre nécessaires des modifications importantes des équipements.

Le temps d'attente du premier (ou de l'un des premiers) SACCH montant en provenance du mobile pour connaître l'avance temporelle effectivement utilisée par ce dernier est négligeable en pratique, de sorte que la qualité de la communication n'est pas altérée de manière détectable par l'oreille humaine durant cette attente.

Bien évidemment, l'invention n'est pas limitée aux modes de réalisation qui viennent d'être décrits.

En particulier, on peut utiliser n'importe quelle méthode permettant à la nouvelle BTS de connaître l'avance temporelle effectivement utilisée par le mobile.

D'autre part, les procédures décrites concernent des handovers internes, mais l'invention s'applique tout autant et de la même manière aux handovers externes.

Il est à noter qu'il est en général préférable, lorsque cela est possible, que la nouvelle BTS détermine elle-même sans tarder la nouvelle avance temporelle utilisée par le mobile. Toutefois, lorsque cela n'est pas possible, du fait notamment que la nouvelle station de base n'a pas été informée du type de handover réalisé, la nouvelle BTS doit attendre un SACCH montant en provenance du mobile.

Enfin, on pourra remplacer tout moyen par un moyen équivalent sans sortir du cadre de l'invention.

## Revendications

1. Procédé de handover entre deux cellules d'un réseau cellulaire de radiocommunications mobiles, chacune desdites cellules étant munie d'une station de base (BTS1, BTS2), procédé selon lequel une station mobile (MS) communicant avec une première desdites stations de base (BTS1), dite ancienne station de base
- reçoit un ordre de changement de station de base (HANDOVER CMD),
- transmet un message contenant une information d'établissement de connexion (SABM) ou des données utiles à la deuxième desdites stations de base, dite nouvelle station de base (BTS2), en tenant compte d'une avance temporelle, dite nouvelle avance temporelle, avec laquelle ladite station mobile doit retarder l'émission de ses messages à destination de ladite nouvelle station de base (BTS2),
ledit procédé étant caractérisé en ce que ledit ordre de changement de station de base (HANDOVER CMD) indique en outre à ladite station mobile (MS) de ne pas émettre de message d'accès en direction de ladite nouvelle station de base (BTS2), et en ce que ladite nouvelle avance temporelle est déterminée par ladite station mobile (MS) lorsqu'elle ne lui est pas communiquée dans ledit ordre de changement de station de base (HANDOVER CMD).

2. Procédé selon la revendication 1 caractérisé en ce que lesdites ancienne et nouvelle stations de base (BTS1, BTS2) étant synchrones et ne se trouvant pas toutes deux sur le même site, ladite nouvelle avance temporelle est déterminée par ladite station mobile (MS) à partir de la dernière valeur de l'avance temporelle, dite ancienne avance temporelle, avec laquelle ladite station mobile (MS) retardait l'émission de ses messages à destination de ladite ancienne station de base (BTS1), ainsi que du décalage temporel observé par ladite station mobile (MS) entre lesdites ancienne et nouvelle stations de base (BTS1, BTS2).

3. Procédé selon la revendication 1 caractérisé en ce que lesdites ancienne et nouvelle stations de base (BTS1, BTS2) étant synchrones et se trouvant toutes deux sur le même site, ladite nouvelle avance temporelle est identique à la dernière valeur de l'avance temporelle, dite ancienne avance temporelle, avec laquelle ladite station mobile retardait l'émission de ses messages à destination de ladite ancienne station de base (BTS1).

4. Procédé selon l'une des revendications 2 ou 3 caractérisé en ce que ladite nouvelle station de base (BTS2) est informée de ladite nouvelle avance temporelle utilisée par ladite station mobile (MS) au moyen d'un rapport de mesure (MEAS REP) régulièrement envoyé par ladite station mobile (MS) à ladite nouvelle station de base (BTS2), et en ce que, en attendant le premier ou l'un des premiers desdits rapports de mesure suivant ledit ordre de changement de station de base (HANDOVER CMD), ladite nouvelle station de base (BTS2) envoie à ladite station mobile (MS) un message lui indiquant qu'elle doit conserver la valeur courante de ladite nouvelle avance temporelle pour retarder l'émission de ses messages à destination de ladite nouvelle station de base (BTS2).

5. Procédé selon l'une des revendications 2 ou 3 caractérisé en ce que ladite nouvelle station de base (BTS2) détermine elle-même ladite nouvelle avance temporelle utilisée par ladite station mobile (MS) à partir de la valeur de la différence entre ladite ancienne avance temporelle et ledit décalage temporel observé, cette valeur étant transmise à ladite nouvelle station de base (BTS2) par ladite station mobile (MS) dans un message (HANDOVER COMPLETE) que cette dernière lui adresse, après avoir transmis ledit message contenant une information d'établissement de connexion (SABM) ou des données utiles à la nouvelle station de base (BTS2), pour l'informer que le procédé de handover est terminé.

6. Procédé selon la revendication 3 caractérisé en ce que ladite nouvelle station de base (BTS2) est informée de ladite nouvelle avance temporelle par le contrôleur de station de base (BSC) qui la contrôle.

7. Procédé selon la revendication 1 caractérisé en ce que, lesdites ancienne et nouvelle stations de base (BTS1, BTS2) étant plésio-synchrones, ladite nouvelle avance temporelle est déduite de la dernière valeur de l'avance temporelle, dite ancienne avance temporelle, avec laquelle ladite station mobile (MS) retardait l'émission de ses messages à destination de ladite ancienne station de base (BTS1), ainsi que du décalage temporel observé par ladite station mobile et du décalage temporel réel connu par lesdites ancienne et nouvelle stations de base (BTS1, BTS2), entre lesdites ancienne et nouvelle stations de base.

8. Procédé selon la revendication 7 caractérisé en ce que ladite nouvelle station de base (BTS2) est informée de ladite nouvelle avance temporelle utilisée par ladite station mobile (MS) au moyen d'un rapport de mesure (MEAS REP) régulièrement envoyé par ladite station mobile à ladite nouvelle station de base (BTS2), et en ce que, en attendant le premier ou l'un des premiers desdits rapports de mesure suivant ledit ordre de changement de station de base (HANDOVER CMD), ladite nouvelle station de base (BTS2) envoie à ladite station mobile (MS) un message lui indiquant qu'elle doit conserver ladite ancienne avance temporelle pour retarder l'émission de ses messages à destination de ladite nouvelle station de base (BTS2).

9. Procédé selon la revendication 7 caractérisé en ce que ladite nouvelle station de base (BTS2) détermine elle-même ladite nouvelle avance temporelle utilisée par ladite station mobile (MS) à partir dudit décalage temporel réel et de la valeur de la différence entre ladite ancienne avance temporelle et ledit décalage temporel observé, cette valeur étant transmise à ladite nouvelle station de base par ladite station mobile dans un message (HANDOVER COMPLETE) que cette dernière lui adresse, après avoir transmis ledit message contenant une information d'établissement de connexion (SABM) ou des données utiles à la nouvelle station de base (BTS2), pour l'informer que le procédé de handover est terminé.

10. Procédé selon la revendication 1 caractérisé en ce que lesdites ancienne et nouvelle stations de base (BTS1, BTS2) étant asynchrones et ledit handover pré-synchronisé, le message contenant ledit ordre de changement de station de base (HANDOVER CMD) contient en outre ladite nouvelle avance temporelle.

11. Procédé selon la revendication 10 caractérisé en ce que ladite nouvelle avance temporelle est communiquée à ladite nouvelle station de base (BTS2) par l'intermédiaire dudit ordre de changement de station de base (HANDOVER CMD).

12. Procédé selon la revendication 10 caractérisé en ce que ladite nouvelle station de base (BTS2) est informée de ladite nouvelle avance temporelle utilisée par ladite station mobile (MS) au moyen d'un rapport de mesure (MEAS REP) régulièrement envoyé par ladite station mobile à ladite nouvelle station de base (BTS2), et en ce que, en attendant le premier ou l'un des premiers desdits rapports de mesure suivant ledit ordre de changement de station de base, ladite nouvelle station de base envoie à ladite station mobile un message lui indiquant qu'elle doit conserver ladite ancienne avance temporelle pour retarder l'émission de ses messages à destination de ladite nouvelle station de base (BTS2).

13. Contrôleur de stations de base pour la mise en oeuvre du procédé selon l'une des revendications 1 à 12, comprenant des moyens de gestion et de commande d'une pluralité de stations de base, pour élaborer et transmettre notamment des ordres de changement de station de base lors d'un handover, caractérisé en ce que lesdits ordres sont tels qu'ils permettent d'indiquer aux stations mobiles de ne pas émettre de message d'accès.

14. Contrôleur de stations de base selon la revendication 13 caractérisé en ce que lesdits ordres de changement de stations de base élaborés par lesdits moyens de gestion et de commande contiennent, dans le cas d'un handover pré-synchronisé, la valeur de la nouvelle avance temporelle.

15. Contrôleur de stations de base selon l'une des revendications 13 ou 14 caractérisé en ce que lesdits moyens de gestion et de commande élaborent et transmettent en outre des messages tels qu'ils permettent d'indiquer auxdites stations de base de ne pas déterminer ladite nouvelle avance temporelle lors d'un handover et de prendre en compte pour celle-ci la valeur indiquée par ladite station mobile dans l'un des premiers rapports de mesure qu'elle envoie.

16. Contrôleur de stations de base selon l'une des revendications 13 ou 14 caractérisé en ce que lesdits moyens de gestion et de commande élaborent et transmettent en outre des messages tels qu'ils permettent d'indiquer auxdites stations de base la valeur de ladite nouvelle avance temporelle.

17. Station mobile pour la mise en oeuvre du procédé selon l'une des revendications 1 à 12 caractérisée en ce que, comprenant des moyens pour déterminer ladite nouvelle avance temporelle, elle comprend des moyens pour répondre à une commande de ne pas émettre de message d'accès à destination de la nouvelle station de base (BTS2) lorsque ladite commande est indiquée dans ledit ordre de changement de station de base (HANDOVER CMD).

18. Station de base pour la mise en oeuvre du procédé selon l'une des revendications 1 à 12, comprenant des moyens pour déterminer ladite nouvelle avance temporelle utilisée par la station mobile, ainsi que des moyens de gestion et de commande pour élaborer et transmettre, lors d'un handover, des messages à la station mobile,
caractérisée en ce que lesdits messages sont tels qu'ils permettent d'indiquer à ladite station mobile de conserver ladite nouvelle avance temporelle qu'elle a déterminée, tant que ladite nouvelle station de base n'a pas reçu en provenance de ladite station mobile un rapport de mesure l'informant de ladite nouvelle avance temporelle.

## Patentansprüche

1. Handover-Verfahren zwischen zwei Zellen eines zellenförmig aufgebauten Mobilfunknetzes, wobei jede der Zellen eine Basisstation (BTS1, BTS2) enthält und ein Mobilfunkgerät (MS), das mit einer ersten dieser Basisstationen (BTS1), alte Basisstation genannt, in Verkehr steht,
- einen Befehl zum Wechsel der Basisstation (HANDOVER CMD) empfängt,
- eine Nachricht mit einer Information über den Aufbau der Verbindung (SABM) oder für die zweite der Basisstationen, neue Basisstation (BTS2) genannt, nützliche Daten unter Berücksichtigung eines Zeitvorlaufs überträgt, der neuer Zeitvorlauf genannt wird, um den das Mobilfunkgerät die Aussendung seiner Nachrichten an die neue Basisstation (BTS2) verzögern muß,
dadurch gekennzeichnet, daß der Befehl zum Wechsel der Basisstation (HANDOVER CMD) außerdem dem Mobilfunkgerät (MS) meldet, daß es keine Zugangsnachricht an die neue Basisstation (BTS2) aussenden soll, und daß der neue Zeitvorlauf von dem Mobilfunkgerät (MS) bestimmt wird, sofern er ihm nicht in dem Befehl zum Wechsel der Basisstation (HANDOVER CMD) übermittelt worden ist.

2. Verfahren nach Anspruch 1, dadurch gekennzeichnet, daß, wenn die alte und die neue Basisstation (BTS1, BTS2) synchron sind und sich nicht beide an derselben Stelle befinden, der neue Zeitvorlauf von dem Mobilfunkgerät (MS) ausgehend vom letzten Wert des Zeitvorlaufs (alter Zeitvorlauf genannt), um den das Mobilfunkgerät (MS) die Aussendung seiner Nachrichten an die alte Basisstation (BTS1) verzögert hatte, sowie ausgehend von der von dem Mobilfunkgerät (MS) beobachteten Zeitverschiebung zwischen der alten und der neuen Basisstation (BTS1, BTS2) bestimmt wird.

3. Verfahren nach Anspruch 1, dadurch gekennzeichnet, daß, wenn die alte und die neue Basisstation (BTS1, BTS2) synchron sind und sich an derselben Stelle befinden, der neue Zeitvorlauf dem letzten Wert des alten Zeitvorlaufs gleicht, mit dem das Mobilfunkgerät die Aussendung seiner Nachrichten an die alte Basisstation (BTS1) verzögert hatte.

4. Verfahren nach einem der Ansprüche 2 oder 3, dadurch gekennzeichnet, daß die neue Basisstation (BTS2) über den neuen von dem Mobilfunkgerät (MS) verwendeten Zeitvorlauf über einen Meßbericht (MEAS REP) informiert wird, der regelmäßig von dem Mobilfunkgerät (MS) an die neue Basisstation (BTS2) gesendet wird, und daß in Erwartung des ersten oder eines der ersten Meßberichte nach dem Befehl über den Wechsel der Basisstation (HANDOVER CMD) die neue Basisstation (BTS2) an das Mobilfunkgerät (MS) eine Nachricht übermittelt, die ihm angibt, daß es den laufenden Wert des neuen Zeitvorlaufs beibehalten soll, um die Aussendung seiner Nachrichten an die neue Basisstation (BTS2) zu verzögern.

5. Verfahren nach einem der Ansprüche 2 oder 3, dadurch gekennzeichnet, daß die neue Basisstation (BTS2) ihrerseits den neuen von dem Mobilfunkgerät (MS) verwendeten Zeitvorlauf ausgehend vom Wert des Unterschieds zwischen dem alten Zeitvorlauf und der beobachteten Zeitverschiebung bestimmt, wobei dieser Wert der neuen Basisstation (BTS2) vom Mobilfunkgerät (MS) in einer Nachricht (HANDOVER COMPLETE) übermittelt wird, die dieses Gerät an die Basisstation sendet, nachdem die Nachricht mit einer Information über den Aufbau der Verbindung (SABM) oder mit Nutzdaten für die neue Basisstation (BTS2) übermittelt wurde, um der neuen Basisstation mitzuteilen, daß das Handover-Verfahren beendet ist.

6. Verfahren nach Anspruch 3, dadurch gekennzeichnet, daß die neue Basisstation (BTS2) den neuen Zeitvorlauf vom Kontrollorgan (BSC) erfährt, das diese Basisstation kontrolliert.

7. Verfahren nach Anspruch 1, dadurch gekennzeichnet, daß, wenn die alte und die neue Basisstation (BTS1, BTS2) plesiosynchron sind, der neue Zeitvorlauf aus dem letzten Wert des alten Zeitvorlaufs, mit dem das Mobilfunkgerät (MS) die Aussendung seiner Nachrichten an die alte Basisstation (BTS1) verzögert hatte, sowie aus der von dem Mobilfunkgerät (MS) beobachteten Zeitverzögerung und der tatsächlichen, der alten und der neuen Basisstation (BTS1, BTS2) bekannten Zeitverschiebung zwischen der ursprünglichen und der neuen Basisstation abgeleitet wird.

8. Verfahren nach Anspruch 7, dadurch gekennzeichnet, daß die neue Basisstation (BTS2) den neuen vom Mobilfunkgerät (MS) verwendeten Zeitvorlauf aus einem Meßbericht (MEAS REP) erfährt, der regelmäßig von dem Mobilfunkgerät (MS) an die neue Basisstation (BTS2) gesendet wird, und daß in Erwartung des ersten oder eines der ersten Meßberichte nach dem Befehl über den Wechsel der Basisstation (HANDOVER CDM) die neue Basisstation (BTS2) an das Mobilfunkgerät (MS) eine Nachricht sendet, die ihm angibt, daß es den ursprünglichen Zeitvorlauf zur Verzögerung der Aussendung seiner Nachrichten an die neue Basisstation (BTS2) beibehalten soll.

9. Verfahren nach Anspruch 7, dadurch gekennzeichnet, daß die neue Basisstation (BTS2) selbst den neuen von dem Mobilfunkgerät (MS) verwendeten Zeitvorlauf ausgehend von der tatsächlichen Zeitverschiebung und dem Wert des Unterschieds zwischen dem ursprünglichen Zeitvorlauf und der beobachteten Zeitverschiebung bestimmt, wobei dieser Wert an die neue Basisstation durch das Mobilfunkgerät in einer Nachricht (HANDOVER COMPLETE) übermittelt wird, die dieses Gerät an die Station übermittelt, nachdem die Nachricht mit einer Information über den Aufbau der Verbindung (SABM) oder mit Nutzdaten für die neue Basisstation (BTS2) übermittelt wurde, um der Station mitzuteilen, daß das Handover-Verfahren beendet ist.

10. Verfahren nach Anspruch 1, dadurch gekennzeichnet, daß, wenn die alte und die neue Basisstation (BTS1, BTS2) asynchron sind und das Handover-Verfahren vorsynchronisiert ist, die Nachricht mit dem Befehl des Wechsels der Basisstation (HANDOVER CMD) außerdem den neuen Zeitvorlauf enthält.

11. Verfahren nach Anspruch 10, dadurch gekennzeichnet, daß der neue Zeitvorlauf der neuen Basisstation (BTS2) vermittels des Befehls zum Wechsel der Basisstation (HANDOVER CMD) übertragen wird.

12. Verfahren nach Anspruch 10, dadurch gekennzeichnet, daß die neue Basisstation (BTS2) über den neuen von dem Mobilfunkgerät (MS) verwendeten Zeitvorlauf durch einen Meßbericht (MEAS REP) informiert wird, der regelmäßig von dem Mobilfunkgerät (MS) an die neue Basisstation (BTS2) gesendet wird, und daß in Erwartung des ersten oder eines der ersten Meßberichte nach dem Befehl zum Wechsel der Basisstation die neue Basisstation an das Mobilfunkgerät (MS) eine Nachricht sendet, die ihm mitteilt, daß es den alten Zeitvorlauf beibehalten soll, um die Aussendung seiner Nachrichten an die neue Basisstation (BTS2) zu verzögern.

13. Basisstations-Kontrollorgan für die Durchführung des Verfahrens nach einem der Ansprüche 1 bis 12, mit Mitteln zur Verwaltung und Steuerung mehrerer Basisstationen, um insbesondere Befehle für den Wechsel der Basisstation bei eine Handover-Verfahren zu erarbeiten und zu übermitteln, dadurch gekennzeichnet, daß die Befehle eine Weisung an die Mobilfunkgeräte enthalten, keine Zugangsnachrichten auszusenden.

14. Basisstations-Kontrollorgan nach Anspruch 13, dadurch gekennzeichnet, daß die Befehle zum Wechsel der Basisstationen, die von den Mitteln zur Verwaltung und Steuerung erarbeitet werden, im Fall eines vorsynchronisierten Handover-Verfahrens den Wert des neuen Zeitvorlaufs enthalten.

15. Basisstations-Kontrollorgan nach einem der Ansprüche 13 oder 14, dadurch gekennzeichnet, daß die Mittel zur Verwaltung und Steuerung außerdem Nachrichten erarbeiten und übermitteln, die den Basisstationen die Weisung erteilen, den neuen Zeitvorlauf bei einem Handover-Verfahren nicht zu bestimmen und hierfür den Wert zu berücksichtigen, der von dem Mobilfunkgerät in einem der ersten von ihm ausgesendeten Meßberichte angegeben wird.

16. Basisstations-Kontrollorgan nach einem der Ansprüche 13 oder 14, dadurch gekennzeichnet, daß die Mittel zur Verwaltung und Steuerung außerdem Nachrichten erarbeiten und übermitteln, mit denen den Basisstationen der Wert des neuen Zeitvorlaufs mitgeteilt wird.

17. Mobilfunkgerät für die Durchführung des Verfahrens nach einem der Ansprüche 1 bis 12, dadurch gekennzeichnet, daß es Mittel zur Bestimmung des neuen Zeitvorlaufs sowie Mittel aufweist, um auf eine Weisung zu antworten, keine Zugangsnachricht an die neue Basisstation (BTS2) auszusenden, wenn diese Weisung in dem Befehl zum Wechsel der Basisstation (HANDOVER CMD) enthalten ist.

18. Basisstation für die Durchführung des Verfahrens nach einem der Ansprüche 1 bis 12, mit Mitteln zur Bestimmung des neuen von dem Mobilfunkgerät verwendeten Zeitvorlaufs sowie mit Mitteln zur Verwaltung und Steuerung, die bei einem Handover-Verfahren Nachrichten erarbeiten und an das Mobilfunkgerät aussenden, dadurch gekennzeichnet, daß die Nachrichten eine Weisung an das Mobilfunkgerät enthalten, den von ihm bestimmten neuen Zeitvorlauf beizubehalten, solange die neue Basisstation von dem Mobilfunkgerät keinen Meßbericht empfangen hat, der eine Information über den neuen Zeitvorlauf enthält.

## Claims

1. Method for handover between two cells of a cellular mobile radio network, each of said cells having a base transceiver station (BTS1, BTS2), wherein a mobile station (MS) communicating with a first of said base transceiver stations (BTS1), called the old base transceiver station:
- receives a handover command (HANDOVER CMD),
- transmits a message containing connection set up information (SABM) or wanted data to the second of said base transceiver stations, called the new transceiver station (BTS2), new base transceiver station, allowing for a timing advance, called the new timing advance, with which said mobile station must delay transmission of its messages to said new base transceiver station (BTS2),
said method being characterised in that said handover command (HANDOVER CMD) further tells said mobile station (MS) not to transmit access messages to said new base transceiver station (BTS2) and in that said new timing advance is determined by said mobile station (MS) if it is not communicated to it in said handover command (HANDOVER CMD).

2. Method according to claim 1 characterised in that, if said old and new base transceiver stations (BTS1, BTS2) are synchronous and are not both on the same site, said new timing advance is determined by said mobile station (MS) from the last value of the timing advance, called the old timing advance, with which said mobile station (MS) was delaying the transmission of its messages to said old base transceiver station (BTS1), and from the time delay observed by said mobile station (MS) between said old and new base transceiver stations (BTS1, BTS2).

3. Method according to claim 1 characterised in that, if said old and new base transceiver stations (BTS1, BTS2) are synchronous and are both on the same site, said new timing advance is identical to the last value of the timing advance, called the old timing advance, with which said mobile station was delaying the transmission of its messages to said old base transceiver station (BTS1).

4. Method according to claim 2 or claim 3 characterised in that said new base transceiver station (BTS2) is informed of said new timing advance used by said mobile station (MS) by means of a measurement report (MEAS REP) sent regularly by said mobile station (MS) to said new base transceiver station (BTS2) and in that while waiting for the first or one of the first of said measurement reports following said handover command (HANDOVER CMD) said new base transceiver station (BTS2) sends to said mobile station (MS) a message telling it that it must retain the current value of said new timing advance to delay the transmission of its messages to said new base transceiver station (BTS2).

5. Method according to claim 2 or claim 3 characterised in that said new base transceiver station (BTS2) determines said new timing advance used by said mobile station (MS) itself from the value of the difference between said old timing advance and said observed time delay, this value being transmitted to said new base transceiver station (BTS2) by said mobile station (MS) in a message (HANDOVER COMPLETE) that the latter sends to it after transmitting said message containing connection set up information (SABM) or wanted data to the new base transceiver station (BTS2), to inform it that handover has been completed.

6. Method according to claim 3 characterised in that said new base transceiver station (BTS2) is informed of said new timing advance by its base station controller (BSC).

7. Method according to claim 1 characterised in that, if said old and new base transceiver stations (BTS1, BTS2) are plesio-synchronous, said new timing advance is deduced from the last value of the timing advance, called the old timing advance, with which said mobile station (MS) was delaying the transmission of its messages to said old base transceiver station (BTS1) and the time delay observed by said mobile station and the real time delay known to said old and new base transceiver stations between said old and new base transceiver stations (BTS1, BTS2).

8. Method according to claim 7 characterised in that said new base transceiver station (BTS2) is advised of said new timing advance used by said mobile station (MS) by means of a measurement report (MEAS REP) sent regularly by said mobile station to said new base transceiver station (BTS2) and in that while waiting for the first or one of the first of said measurement reports following said handover command (HANDOVER CMD) said new base transceiver station (BTS2) sends to said mobile station (MS) a message telling it that it must retain said old timing advance for delaying the transmission of its messages to said new base transceiver station (BTS2).

9. Method according to claim 7 characterised in that said new base transceiver station (BTS2) determines said new timing advance used by the mobile station (MS) itself from said real time delay and from the value of the difference between said old timing advance and said observed time delay, this value being transmitted to said new base transceiver station by said mobile station in a message (HANDOVER COMPLETE) that the latter sends to it after transmitting said message containing connection set up information (SABM) or wanted data to the new base transceiver station (BTS2), to inform it that handover has been completed.

10. Method according to claim 1 characterised in that, if said old and new base transceiver stations (BTS1, BTS2) are asynchronous and said handover is pre-synchronised, the message containing said handover command (HANDOVER CMD) further contains said new timing advance.

11. Method according to claim 10 characterised in that said new timing advance is communicated to said new base transceiver station (BTS2) by means of said handover command (HANDOVER CMD).

12. Method according to claim 10 characterised in that said new base transceiver station (BTS2) is informed of said new timing advance used by said mobile station (MS) by means of a measurement report (MEAS REP) sent regularly by said mobile station to said new base transceiver station (BTS2) and in that while waiting for the first or one of the first of said measurement reports after said handover command said new base transceiver station sends to said mobile station a message telling it that it must retain said old timing advance to delay the transmission of its messages to said new base transceiver station (BTS2).

13. Base station controller for implementing the method according to any one of claims 1 to 12 comprising a control unit for a plurality of base transceiver stations for producing and transmitting handover commands on the occasion of handover, characterised in that said commands tell the mobile stations not to transmit access messages.

14. Base station controller according to claim 13 characterised in that said handover commands produced by said control unit contain the value of the new timing advance in the case of pre-synchronised handover.

15. Base station controller according to claim 13 or claim 14 characterised in that said control unit further produces and transmits messages telling said base transceiver stations not to determine said new timing advance on the occasion of handover and to use for the latter the value indicated by said mobile station in one of the first measurement reports that it sends.

16. Base station controller according to claim 13 or claim 14 characterised in that said control unit further produces and transmits messages telling said base transceiver stations the value of said new timing advance.

17. Mobile station for implementation of the method according to any one of claims 1 to 12, characterised in that it comprises means for determining said new timing advance and means for responding to a command not to send access messages to the new base transceiver station (BTS2) if said command is indicated in said handover command (HANDOVER CMD).

18. Base transceiver station for implementation of the method according to any one of claims 1 to 12, comprising means for determining said new timing advance used by the mobile station and a control unit for producing and transmitting messages to the mobile station on the occasion of handover, characterised in that said messages tell said mobile station to retain said new timing advance that it has determined pending reception by said base transceiver station of a measurement report from said mobile station giving it said new timing advance.
